(19) Europäisches Patentamt

European Patent Office

Office européen des brevets

(11) **EP 0 915 788 B1**

(12) **EUROPÄISCHE PATENTSCHRIFT**

(45) Veröffentlichungstag und Bekanntmachung des Hinweises auf die Patenterteilung:
**13.11.2002 Patentblatt 2002/46**

(21) Anmeldenummer: 97935566.6

(22) Anmeldetag: **04.08.1997**

(51) Int Cl.⁷: **B60T 8/40**

(86) Internationale Anmeldenummer:
**PCT/EP97/04232**

(87) Internationale Veröffentlichungsnummer:
**WO 98/006611 (19.02.1998 Gazette 1998/07)**

(54) **VERFAHREN ZUR STEUERUNG DER HYDRAULIKPUMPE EINER GEREGELTEN BREMSANLAGE**

METHOD FOR THE CONTROL OF A HYDRAULIC PUMP IN A REGULATED BRAKING SYSTEM

DISPOSITIF POUR LA COMMANDE D'UNE POMPE HYDRAULIQUE DANS UN SYSTEME DE FREINAGE REGULE

(84) Benannte Vertragsstaaten:
**DE FR GB**

(30) Priorität: **12.08.1996 DE 19632311**

(43) Veröffentlichungstag der Anmeldung:
**19.05.1999 Patentblatt 1999/20**

(73) Patentinhaber: **Continental Teves AG & Co. oHG**
**60488 Frankfurt (DE)**

(72) Erfinder:
• **KOHL, Andreas**
**D-55126 Mainz (DE)**
• **SCHMIDT, Robert**
**D-56477 Rennerod (DE)**
• **BURKHARD, Dieter**
**D-67714 Waldfischbach-Burgalben (DE)**
• **WOYWOD, Jürgen**
**D-64542 Mörfelden (DE)**

(74) Vertreter: **Blum, Klaus-Dieter**
**Continental Teves AG & Co. oHG,**
**Guerickestrasse 7**
**60488 Frankfurt (DE)**

(56) Entgegenhaltungen:
| | |
|---|---|
| EP-A- 0 313 292 | EP-B- 0 577 609 |
| WO-A-96/15927 | DE-A- 3 818 260 |
| DE-A- 4 232 614 | DE-A- 4 440 517 |

**Beschreibung**

Die Erfindung bezieht sich auf ein Verfahren zur adaptiven Steuerung der Hydraulikpumpe einer geregelten Bremsanlage, die Niederdruckspeicher enthält, die zumindest einen Teil des im Regelfall aus den Radbremsen abgeleiteten Druckmittels aufnehmen und die durch die Hydraulikpumpe entleert werden. Bei diesem Verfahren wird durch Erfassen und Auswertung von Größen, die den Druckmittelfluß bestimmen, ein Volumenmodell gebildet, das näherungsweise den Druckmittelab- und -zufluß wiedergibt.

Aus der DE 38 18 260 A1 (P 6476) ist eine Schaltungsanordnung zur Steuerung der Hilfsenergieversorgung einer Bremsanlage mit Blockierschutz- und/oder Antriebsschlupfregelung bekannt, bei der durch Messen und Auswerten von Größen, die den Bedarf an Hilfsenergie oder den Druckmittelfluß bestimmen, ein Volumenmodell gebildet wird, welches näherungsweise den Druckmittelabfluß aus dem Hauptzylinder der Bremsanlage und den Druckmittelbedarf wiedergibt. Dieses Volumenmodell wird zur Steuerung der Hilfsenergieversorgung, nämlich zum Einschalten und Ausschalten einer Hydraulikpumpe eingesetzt. Auf diese Weise werden ein geringer Hilfsenergieverbrauch, relativ geringe Druckschwankungsamplituden während eines Regelungsvorgangs und, weil das unerwünschte Zurücksetzen des Bremspedals beim Einschalten der Pumpe verringert wird, eine Verbesserung des Pedalkomforts erzielt.

Bei einer anderen bekannten Bremsanlage, die in der DE 42 32 614 A1 (P 7395) beschrieben ist, wird der Füllstand des Niederdruckspeichers einer blockiergeschützten hydraulischen Bremsanlage durch Messen und Auswerten des Druckes am Eingang des Niederdruckspeichers oder mit Hilfe eines Wegsensors, der den Weg des Kolbens im Niederdruckspeicher mißt, bestimmt und zur Ermittlung der benötigten Pumpen-Förderleistung sowie schließlich zur Steuerung der Hydraulikpumpe ausgewertet.

Des weiteren ist aus der DE 44 40 517 A1 ein Verfahren zur Steuerung der Rückförderpumpe einer Bremsanlage bekannt, bei dem diese Pumpe bedarfsgerecht in Abhängigkeit von dem Wert einer Stellgröße und/oder einer Regelabweichung eines Reglers, der das Bremsmoment oder die Raddrehzahl beeinflußt, gesteuert wird.

Schließlich ist es aus der EP 05 77 609 B1 (P 7168) noch bekannt, bei einer Bremsanlage mit Blokkierschutz- und Antriebsschlupfregelung (ABS und ASR) die Drehzahl der Hydraulikpumpe im ASR-Betrieb durch Begrenzung der Leistungsaufnahme des elektrischen Pumpenantriebsmotors zu verringern, um die Geräuschentwicklung zu reduzieren. In sicherheitskritischen Situationen oder bei bestimmten Fehlfunktionen wird diese Leistungsbegrenzung aufgehoben.

Der Erfindung liegt nun die Aufgabe zugrunde, ein Verfahren zu entwickeln, mit dem der tatsächliche Bedarf an Förderleistung und damit recht genau die gerade erforderliche Drehzahl ermittelt werden kann. Es soll die geringste, jedoch unbedingt ausreichende, d.h. auch in kritischen Situationen und unter ungünstigen Umständen noch ausreichende Pumpendrehzahl festgestellt werden.

Aus Sicherheitsgründen war eine in jedem Fall ausreichende Drehzahl- bzw. Förderleistung verlangt. Andererseits wurde großen Wert auf möglichst geringe Pumpendrehzahlen gelegt, um das Entstehen störender Geräusche, die drehzahlabhängig sind, zu vermeiden und um den Pedalkomfort, der durch unerwünschte Pedalbewegungen beeinträchtigt wird, zu erhöhen.

Es hat sich herausgestellt, daß diese Aufgabe durch das im Anspruch 1 beschriebene Verfahren gelöst werden kann, dessen Besonderheit darin besteht, daß in einem ersten Schritt radindividuell der Bremsdruckverlauf zumindest näherungsweise ermittelt wird, daß dann auf Basis des Bremsdruckverlaufs in den an einem Bremskreis angeschlossenen Radbremsen für jeden Bremskreis ein Volumenmodell gebildet wird, welches näherungsweise das von dem jeweiligen Niederdruckspeicher aufgenommene Druckmittelvolumen bzw. den Füllstand des Niederdruckspeichers wiedergibt, daß die Regelfrequenz bzw. die Zeitspanne zwischen zwei aufeinanderfolgenden Bremsdruckabbauphasen ermittelt und daß die Förderleistung der Hydraulikpumpe derart bemessen wird, daß die Zeitspanne zwischen zwei aufeinanderfolgenden Phasen zum vollständigen Entleeren des Niederdruckspeichers (gerade) genügt.

Das erfindungsgemäße Verfahren basiert also auf rechnerischer Auswertung der zur Verfügung stehenden Daten. Auf zusätzliche Sensoren wird verzichtet. Es wird zunächst für jedes Rad - radindividuell -, vorzugsweise durch ein sog. Raddruckmodell, der Radbremsdruck ermittelt, sodann für jeden Bremskreis - bremskreisindividuell - das Volumenmodell, das den Füllstand (oder das noch zur Verfügung stehende Speicher-Restvolumen) wiedergibt, aus den Auslaßventil-Betätigungszeiten und dem Raddruck der angeschlossenen Radbremsen ermittelt. Nach einem vorteilhaften Ausführungsbeispiel wird dann der Maximalwert der in Form des Volumenmodells ermittelten Füllstandes ausgewählt und auf Basis dieses Wertes und der Regelfrequenz bzw. der Zeitspanne zwischen zwei aufeinanderfolgenden Bremsdruckabbauphasen die Pumpendrehzahl bemessen.

Die Erfindung beruht auf der Erkenntnis, daß sich auf die vorgenannte Weise diejenige Pumpendrehzahl ermitteln läßt, die in jedem Fall zum sofortigen, vollständigen Entleeren der Niederdruckspeicher ausreicht, die aber andererseits - abgesehen von einem Sicherheitszuschlag - keineswegs höher als unbedingt notwendig liegt. Dadurch werden die Bremsenfunktionen sichergestellt und gleichzeitig die Geräuschentwicklung minimiert.

Nach einem weiteren vorteilhaften Ausführungsbeispiel der Erfindung wird zum radindividuellen Ermitteln des Bremsdruckverlaufs in den einzelnen Radbremsen ein Radbremsdruckmodell auf Basis der aktuellen Fahrzeugverzögerung, die ein Maß für das aktuelle Blockierdruckniveau darstellt, auf Basis der Ventilbetätigungszeiten und der Druck-/Volumenkennlinie des Systems rechnerisch gebildet. Theoretisch könnte auch für jedes Rad ein Drucksensor verwendet werden, was jedoch mit wesentlich höheren Kosten verbunden wäre.

Das Volumenmodell, das den Füllstand der Niederdruckspeicher - oder das zur Verfügung stehende Restvolumen - wiedergibt, wird erfindungsgemäß auf Basis des radindividuell ermittelten Bremsdruckverlaufs und der Auslaßventil-Betätigungszeiten und natürlich der Druck-Volumenkennlinie des hydraulischen Systems gebildet. Auch an dieser Stelle wird auf Sensoren verzichtet.

Ferner hat es sich als vorteilhaft erwiesen, in Abhängigkeit von dem Volumenmodell bzw. von dem maximalen Füllstand in den Niederdruckspeichern, die von einer gemeinsamen Hydraulikpumpe entleert werden, einen Mindestwert oder vorgesteuerten Wert der Pumpendrehzahl vorzugeben, der dann mit der in Abhängigkeit von der Regelfrequenz ermittelten Pumpendrehzahl verglichen wird. Dies ist eine Sicherheitsmaßnahme zur Gewährleistung einer Mindestdrehzahl. Der Mindestwert kommt nur dann zum Tragen, wenn die regelfrequenzabhängige Drehzahl kleiner sein sollte.

Der vorgenannte Mindestwert oder vorgesteuerte Wert ist abhängig von dem aktuellen Füllstand der Niederdruckspeicher, und zwar von dem Maximalwert. Außerdem ist es möglich, den Mindestwert in Abhängigkeit von der Fahrzeuggeschwindigkeit zu variieren. Bei geringen Geschwindigkeiten reicht sicherlich in jedem Fall eine relativ kleine Pumpendrehzahl.

Weitere Merkmale, Vorteile und Anwendungsmöglichkeiten der Erfindung gehen aus der folgenden Beschreibung weiterer Details anhand der beigefügten Abbildungen hervor.

Es zeigen:

Fig. 1    in symbolischer Darstellung, beschränkt auf einen Bremskreis, die wichtigsten Komponenten einer hydraulischen Bremsanlage mit Blockierschutz- und Antriebsschlupfregelung,

Fig. 2    in Diagrammen den Geschwindigkeitsverlauf eines Fahrzeugrades während einer Blockierschutzregelungsvorgangs, den Druckverlauf in der Radbremse dieses geregelten Rades und der Füllstand bzw. das von dem Niederdruckspeicher aufgenommene Druckmittelvolumen infolge des betrachteten Regelungsvorganges,

Fig. 3    als Symboldarstellung den Ablauf des erfindungsgemäßen Verfahrens,

Fig. 4    im Ablaufdiagramm die einzelnen Schritte bei der Erfassung und Verarbeitung der Eingangsgrößen für die Bestimmung der Pumpendrehzahl bei Anwendung des erfindungsgemäßen Verfahrens,

Fig. 5    im Diagramm die Abhängigkeit der Pumpendrehzahl von dem Füllstand des Niederdruckspeichers gemäß einem Ausführungsbeispiel der Erfindung,

Fig. 6    im Diagramm ein Beispiel für die Abhängigkeit der Pumpendrehzahl von der Fahrzeuggeschwindigkeit.

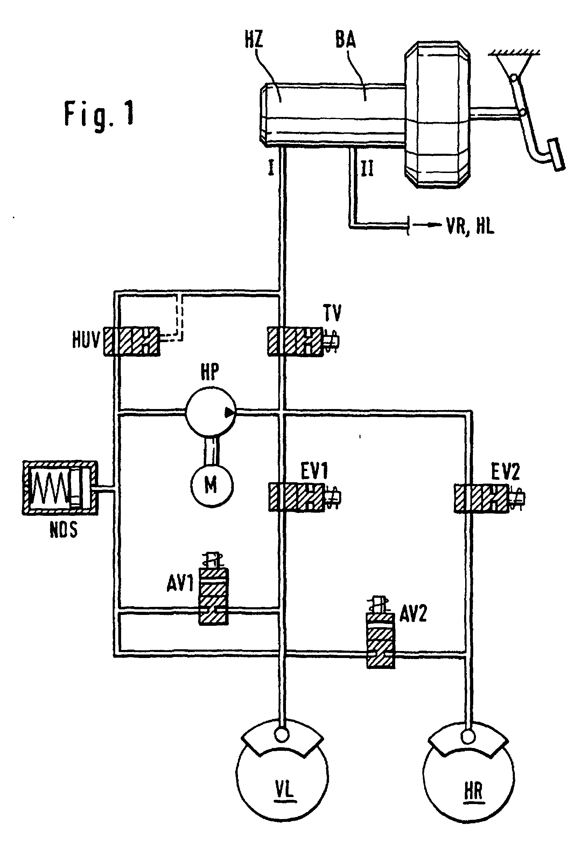

Fig. 1 zeigt den grundsätzlichen Aufbau einer hydraulischen Bremsanlage der hier in Rede stehenden Art. Es handelt sich um eine zweikreisige Bremsanlage BA, an deren Hauptzylinder HZ die beiden hydraulisch getrennten Bremskreise I, II angeschlossen sind. Da beide Bremskreise I, II identisch aufgebaut sind, wurden nur die Komponenten eines Bremskreises I wiedergegeben. Bei einer Bremsanlage mit diagonaler Bremskreisaufteilung sind, wie dargestellt, das linke Vorderrad VL und das rechte Hinterrad HR an den Bremskreis I, die beiden anderen Räder VR,HL in gleicher Weise an den Bremskreis II angeschlossen.

Bei hydraulischen Bremsanlagen dieser Art ist jedes Rad mit einem Einlaßventil EV1 bzw. EV2 und einem Auslaßventil AV1, AV2 ausgerüstet. In ihrer Normal- oder Ruhestellung sind die Einlaßventile EV1, EV2 auf Durchlaß geschaltet, die Auslaßventile AV1, AV2 gesperrt.

Im dargestellten Ausführungsbeispiel handelt es sich um ein sog. geschlossenes Hydrauliksystem. Daher wird das in der Bremsdruckabbauphase über ein Auslaßventil AV1, AV2 aus der Radbremse abgeleitete Druckmittel mit Hilfe einer hydraulischen Pumpe HP zurückgefördert. Zum schnelleren Druckabbau ist ein Niederdruckspeicher NDS pro Bremskreis vorhanden, der zunächst das abgelassene Druckmittel aufnimmt und der über die Hydraulikpumpe HP entleert wird.

Die gezeigte Bremsanlage eignet sich auch zur Antriebsschlupfregelung. Hierzu ist ein in der Ruhestellung offenes Trennventil TV vorhanden, das im ASR-Modus sperrt. Über ein hydraulisches Umschaltventil HUV, das in der Ruhestellung bzw. bei drucklosem Hauptzylinder HZ auf Durchlaß geschaltet ist, besteht im ASR-Modus ein Hydraulikweg von der Saugseite der Hydraulikpumpe HP zum Hauptzylinder HZ. Im ABS-Modus ist das Ventil HUV gesperrt.

Alle Einlaß-, Auslaß- und Trennventile sind elektromagnetisch betätigbar. Die Hydraulikpumpe HP wird von einem Elektromotor M angetrieben, an dem auch eine entsprechende, in dem nicht gezeigten Bremskreis II angeordnete Pumpe oder ein Pumpenkreis angeschlossen ist.

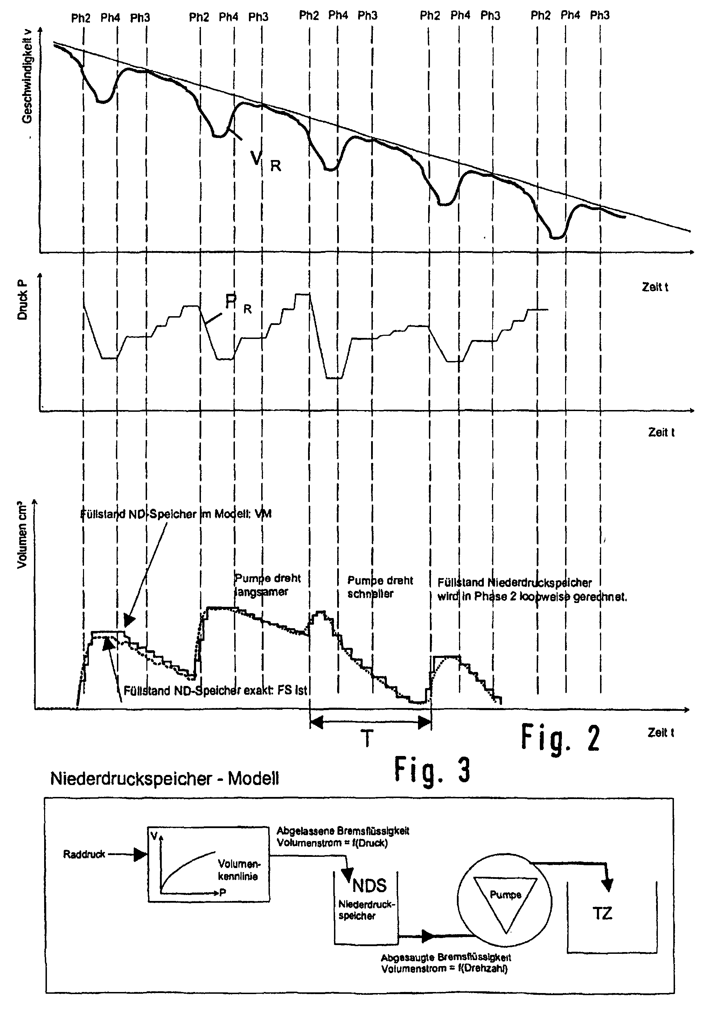

Zur Veranschaulichung des betrachteten Regelungsvorgangs, bei dem das erfindungsgemäße Verfahren zur Anwendung gelangt, dienen die Diagramme nach Fig. 2. Es sind die Geschwindigkeitskennlinie $v_R$, Druck- $p_R$ und Volumenkennlinien über der gleichen Zeitachse t aufgetragen. Es wird ein Blockierschutzregelungsvorgang betrachtet. Phase 2 (Ph2) kennzeichnet den einsetzenden Bremsdruckabbau beim Auftreten einer Blockiertendenz. In der Phase 2 ist das Einlaßventil EV1 oder EV2 geschlossen, das Auslaßventil AV1 oder AV2 (Fig. 1) wird angesteuert und öffnet. Nach vorgegebener Zeitspanne schließt das Auslaßventil, so daß eine Druckkonstanthaltung einsetzt. Dies zeigt die Druckverlauf-Kennlinie $p_R$. Das über die Auslaßventile AV1, AV2 abgeleitete Druckmittel wird von dem Niederdruckspeicher NDS aufgenommen, der von der Hydraulikpumpe HP entleert wird.

Die untere Kennlinie in Fig. 2 zeigt gestrichelt den tatsächlichen Füllstand $FS_{ist}$ des Niederdruckspeichers in Abhängigkeit von dem Regelungsvorgang, auf den sich die Geschwindigkeitskurve $v_R$ und der Druckverlauf $p_R$ beziehen. Dieser Füllstand wird bei dem erfindungsgemäßen Verfahren durch ein theoretisches, errechnetes Volumenmodell VM nachgebildet. Die durchgezogene Füllstandskurve in Fig. 2 gibt dieses Volumenmodell VM wieder. Während der Phase 2 (Ph2) wird der Füllstand des Niederdruckspeichers durch den Zufluß über das Auslaßventil, z.B. über AV1, und durch die relativ langsame Entleerung über die inzwischen eingeschaltete, fördernde Hydraulikpumpe HP bestimmt.

In den Phasen 3,4 (Ph3,4), in denen das Auslaßventil AV geschlossen ist und, wie die Druckkurve zeigt, der Radbremsdruck erneut ansteigt, nehmen der tatsächliche Füllstand $FS_{ist}$ des Niederdruckspeichers NDS und das Volumenmodell VM in etwa linear ab.

Die Volumenkennlinie in Fig. 2 zeigt den Füllstands-Verlauf bei verschiedenen Pumpen-Drehzahlen. Bei Anwendung des erfindungsgemäßen Verfahrens wird die Drehzahl der Pumpe HP derart bemessen, daß in der Zeitspanne T, die den Abstand zwischen zwei aufeinanderfolgenden Bremsdruckabbauphasen Ph2 darstellt, eine vollständige Entleerung des Niederdruckspeichers 4 erreicht wird. Da die Pumpe mit möglichst geringer Drehzahl umläuft, sollte im Idealfall exakt zum Ende der Zeitspanne T die Entleerung des Niederdruckspeichers beendet sein. Durch das erfindungsgemäße Verfahren wird exakt die Drehzahl ermittelt und vorgegeben, die erforderlich ist, um in der Zeitspanne T mit hoher Sicherheit und Zuverlässigkeit den Niederdruckspeicher zu entleeren.

Fig. 3 veranschaulicht die wesentlichen Elemente und Vorgänge des erfindungsgemäßen Verfahrens. Aus dem radindividuell ermittelten Raddruck wird unter Berücksichtigung der Druck/Volumenkennlinien des Systems die in den Niederdruckspeicher abgelassene Bremsflüssigkeit ermittelt.

Der Volumenstrom über ein Auslaßventil (AV) ist eine Funktion des in der Radbremse herrschenden Bremsdruckes. Üblicherweise sind, wie in Fig. 1 dargestellt, jeweils zwei Radbremsen an einen gemeinsamen Niederdruckspeicher angeschlossen. Die Zeitspanne, die zur Leerung des Niederdruckspeichers zur Verfügung steht, ist abhängig von der Regelfrequenz bzw. von der Zeitspanne T zwischen zwei aufeinanderfolgenden Bremsdruckabbauphasen (Ph2). Die Drehzahl oder Förderleistung der Hydraulikpumpe (HP) richtet sich folglich nach der Regelfrequenz und nach dem Volumenmodell oder Volumen im Niederdruckspeicher; da jedoch mit einer gemeinsamen Pumpe, die zweikreisig sein kann, die Niederdruckspeicher beider Bremskreise I, II entleert werden, bestimmt der Niederdruckspeicher mit dem höheren Füllstand die Drehzahl der Pumpe, um die völlige Entleerung am Ende der Zeitspanne T zwischen zwei aufeinanderfolgenden Bremsdruckabbauphasen zu gewährleisten.

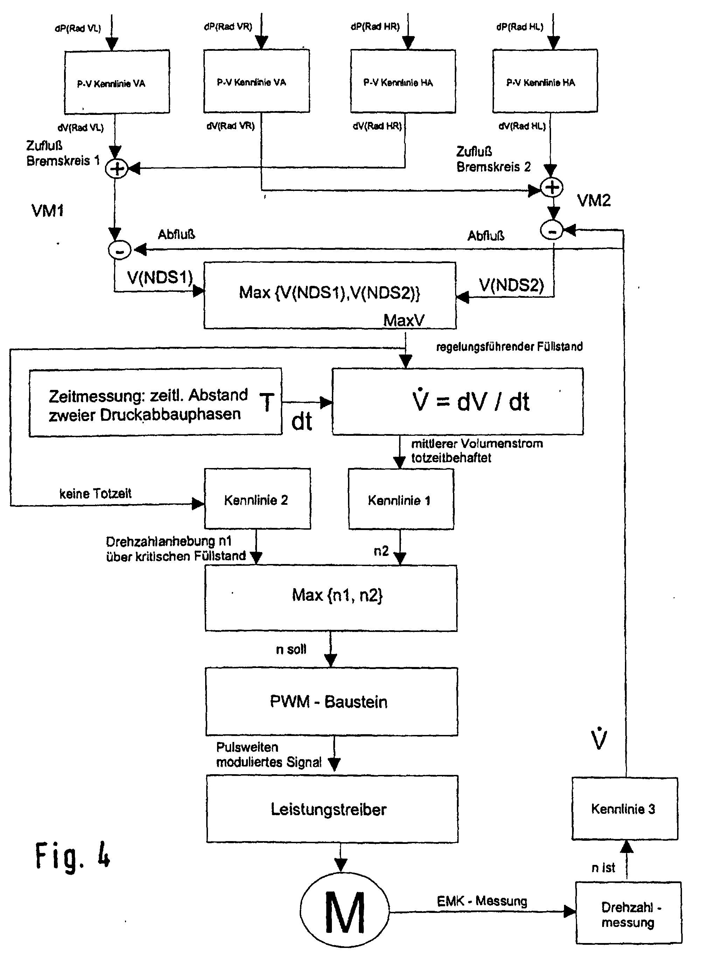

Fig. 4 veranschaulicht nochmals in Einzelheiten die einzelnen Schritte und den Steuerungs- oder Regelungsverlauf bei Durchführung des erfindungsgemäßen Verfahrens.

Als erstes werden radindividuell die Druckänderungen dP erfaßt und unter Berücksichtigung der Druck-/Volumenkennlinien, die im allgemeinen für die Vorderachse VA und die Hinderachse HA verschieden sind, zur Ermittlung der Volumenänderungen dV ausgewertet. Da der Darstellung in Fig. 4 eine diagonale Bremskreisaufteilung zugrunde liegt, werden jeweils die Volumenänderungen dV eines Vorderrades und eines Hinterrades

$$dV(RadVL) + dV(RadHR); dV(RadVR) + dV(RadHL)$$

zusammengefaßt. Das Volumenmodell VM bzw. der Füllstand der einzelnen Niederdruckspeicher ergeben sich aus dem Zufluß an Volumen dV über die Auslaßventile, die zu den angeschlossenen Radbremsen führen, und aus den angeschlossenen Radbremsen und aus dem Abfluß aus dem jeweiligen Niederdruckspeicher infolge der Pumpenförderung. Der jeweilige Maximalwert MaxV, also die Füllhöhe in dem Niederdruckspeicher NDS1 oder NDS2, der die größte Menge aufgenommen hat, ist für den weiteren Verlauf der Regelungsschritte maßgebend. In jedem einzelnen Rechenschritt oder Loop wird der Maximalwert, der durch die Volumenmodellbildung (VM) ermittelt wurde, zur Festlegung der Förderleistung

$$\dot{V} = dV/dt = V/T$$

und damit der Pumpendrehzahl festgelegt; dt bzw T ist die Zeitspanne zwischen zwei aufeinanderfolgenden Druckabbauphasen (ph2).

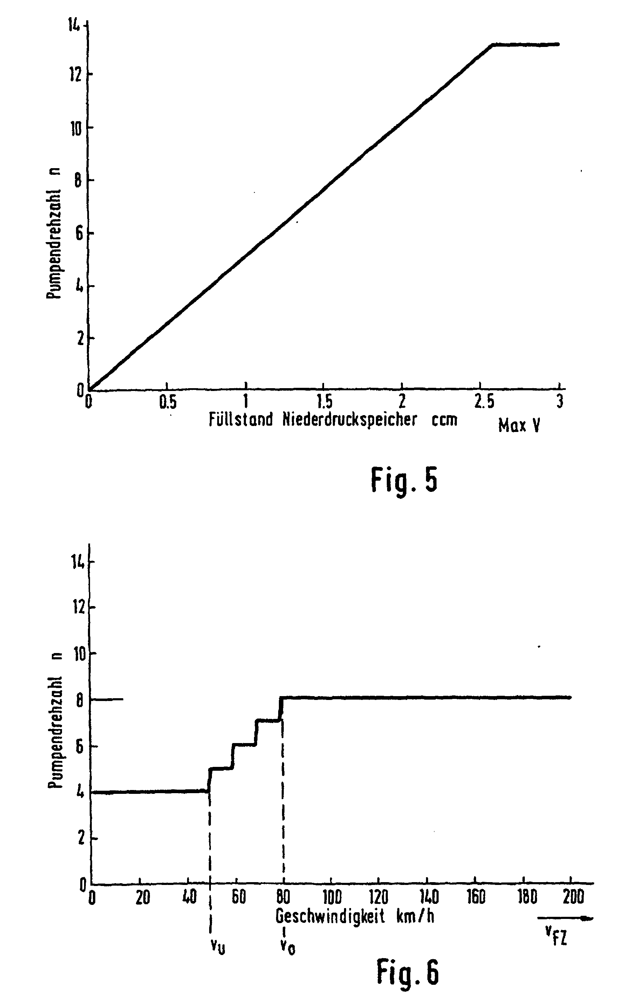

Wie aus Fig. 4 zu erkennen ist, wird in Abhängigkeit von dem Maximalwert MaxV auf direktem Wege eine Drehzahl oder Förderleistung der Hydraulikpumpe bestimmt, die sich aus der Kennlinie 2 ergibt. Diese Kennlinie ist in Fig. 5 dargestellt. In Abhängigkeit von dem Füllstand MaxV wird ein Mindestwert der Pumpendrehzahl vorgegeben. Es handelt sich um eine Vorsteuerung, die in Funktion tritt, wenn z.B. aufgrund eines Fehlers oder einer besonders ungünstigen Situation zum maßgeblichen Zeitpunkt der Füllstand des Niederdruckspeichers über dem Wert liegt, der sich aus der Berechnung $\dot{V} = dV/dt$ bzw. $\dot{V} = V/T$ ergibt.

Der Wert $\dot{V}$, der sich aus der Regelfrequenz ergibt und errechnet wird, wobei zwangsläufig die Werte in dem vorangegangenen Rechentakt oder Loop berücksichtigt werden, ergibt lt. Figur 4 eine "Kennlinie 1". Die "Kennlinie 2" wird dagegen, wie zuvor erläutert, von dem aktuellen Wert MaxV direkt abgeleitet. Es werden also auf unabhängigem Wege die Drehzahlen n1 und n2 ermittelt.

Der größere Wert Max (n1, n2) bestimmt nun die Sollvorgabe für die Pumpendrehzahl n-soll. In einem anschließenden Rechenschritt oder in einem speziellen Elektronikbauteil (PWM-Baustein) wird eine Pulsfolge errechnet, die über Leistungstreiber zu dem elektrischen Antriebsmotor M der Hydraulikpumpe weitergeleitet wird. Diese Pulsfolge legt die Drehzahl der Pumpe fest.

In einem Regelkreis wird die tatsächliche Drehzahl n-ist des Antriebsmotors M der Hydraulikpumpe gemessen und der Meßwert n-ist unter Berücksichtigung der Drehzahl-/Volumenkennlinie (Kennlinie 3) ausgewertet. Die Drehzahl des Antriebsmotors M kann durch sogenannten EMK-Messung, nämlich durch Messung der Generatorspannung in den Pulspausen-Zeiten, ermittelt werden.

Der Ausgangswert $\dot{V}$ der Kennlinie 3, nämlich der durch die Hydraulikpumpe erzielte Abfluß an Druckmittel aus den Niederdruckspeichern, wird zurückgeführt und bei der Bildung des Volumenmodells VM1 und VM2 entsprechend berücksichtigt.

Schließlich ist in Fig. 6 in Form einer weiteren Kennlinie dargestellt, daß die Pumpendrehzahl zusätzlich noch in Abhängigkeit von der Fahrzeuggeschwindigkeit variiert werden kann. Auch diese Kennlinie ergibt einen Mindestwert. Sollte sich aus der Kennlinie 2 oder der Kennlinie 1 ein höherer Wert ergeben, genießt dieser Priorität.

Fig. 6 ist zu entnehmen, daß die Mindestdrehzahl bei geringen Fahrzeuggeschwindigkeiten - hier unter 50km/h - relativ gering sein darf und mit ansteigender Fahrzeuggeschwindigkeit kontinuierlich, oder wie dargestellt, in Stufen bis zum Erreichen einer oberen Schwelle erhöht wird. Bei geringen Fahrzeuggeschwindigkeiten ist die Geräuschentwicklung besonders kritisch, weshalb eine geringe Pumpendrehzahl erwünscht ist. Bei höheren Geschwindigkeiten ist es wichtig, daß eine bestimmte Mindestförderleistung gewährleistet ist, was durch die höhere Mindestdrehzahl begünstigt wird.

## Patentansprüche

1. Verfahren zur adaptiven Steuerung der Hydraulikpumpe einer geregelten Bremsanlage, welche Niederdruckspeicher enthält, die Druckmittel, das im Regelfall aus den Radbremsen abgeleitet wird, aufnehmen und die durch die Hydraulikpumpe entleert werden, wobei durch Erfassen und Auswerten von Größen, die den Druckmittelfluß bestimmen, ein Volumenmodell gebildet wird, das näherungsweise den Druckmittelzufluß und -abfluß wiedergibt, **dadurch gekennzeichnet, daß** radindividuell der Bremsdruckverlauf ($p_R$) zumindest näherungsweise ermittelt wird, daß auf Basis des Bremsdrucksverlaufs in den an einen Bremskreis (I,II) angeschlossene Radbremsen für jeden Bremskreis ein Volumenmodell (VM1,2) gebildet wird, das näherungsweise das von dem jeweiligen Niederdruckspeicher (NDS1,2) aufgenommene Druckmittelvolumen bzw. den Füllstand des Niederdruckspeichers wiedergibt, daß die Regelfrequenz bzw. die Zeitspanne (T) zwischen zwei aufeinanderfolgenden Bremsdruckabbauphasen (Ph 2) ermittelt und daß die Förderleistung der Hydraulikpumpe (HP) derart bemessen wird, daß die Zeitspanne (T) für zwei aufeinanderfolgenden Bremsdruckabbauphasen (Ph 2) zum vollständigen Entleeren der Niederdruckspeicher (NDS1,2) genügt.

2. Verfahren nach Anspruch 1, **dadurch gekennzeichnet, daß** zum Ermitteln des Bremsdruckverlaufs ($p_R$) radindividuell ein Radbremsdruckmodell auf Basis der aktuellen Fahrzeugverzögerung, der Betätigungszeiten der Ventile(AV,EV) , der Druck-/ Volumenkennlinie des Systems und ggf. weiterer Einflußgrößen gebildet wird.

3. Verfahren nach Anspruch 1 oder 2, **dadurch gekennzeichnet, daß** das Volumenmodell(VM1,2) individuell für jeden Bremskreis (I,II) auf Basis des radindividuellen Radbremsdruckmodells und der Auslaßventil-Betätigungszeiten, der Druck-/Volumenkennlinie des hydraulischen Systems, einschließlich der Radbremsen und der Niederdruckspeicher, gebildet wird.

4. Verfahren nach einem oder mehreren der Ansprüche 1 bis 3, **dadurch gekennzeichnet, daß** die Förderleistung der Hydraulikpumpe (HP) bzw. die Drehzahl (n) der Hydraulikpumpe in Abhängigkeit von dem Maximalwert(MaxV) des Speicher-Füllstandes bzw. der von den Niederdruckspeichern (NDS1,2) aufgenommenen, durch Volumenmodell-Bildung ermittelten Druckmittelvolumen (VM1,2) bzw. Füllmengen derart bemessen wird, daß die zwischen zwei aufeinanderfolgenden Bremsdruckabbauphasen zur Verfügung stehende Zeitspanne (T) zum Entleeren der Niederdruckspeicher (NDS1,2) gerade genügt.

**5.** Verfahren nach einem oder mehreren der Ansprüche 1 bis 4, **dadurch gekennzeichnet, daß** in Abhängigkeit von dem Füllstand bzw. dem von dem Niederdruckspeicher (NDS1,2) aufgenommenen Druckmittelvolumen ein Mindestwert der Förderleistung ($\dot{V}$) bzw. der Hydraulikpumpen-Drehzahl (n) vorgegeben wird.

**6.** Verfahren nach einem oder mehreren der Ansprüche 1 bis 5, **dadurch gekennzeichnet, daß** der vorgegebene Mindestwert der Pumpendrehzahl von der Fahrzeuggeschwindigkeit ($v_{FZ}$) abhängig ist, wobei bis zu einer unteren Fahrzeuggeschwindigkeitsschwelle ($v_u$) ein unterer Drehzahl-Grenzwert, oberhalb einer oberen Fahrzeuggeschwindigkeitsschwelle ($v_o$) ein höherer unterer Drehzahl-Grenzwert gelten und im Bereich zwischen der unteren und der höheren Geschwindigkeitsschwelle eine lineare oder stufenweise Anhebung der Drehzahl erfolgt.

**Claims**

**1.** A process for the adaptive control of, the hydraulic pump of a controlled brake system containing low pressure accumulators which take up pressure fluid discharged in case of control from the wheel brakes and which are evacuated by the hydraulic pump, with a volume model being formed by sensing and evaluating of parameters determining the pressure fluid flow, with the said volume model indicating by way of approximation the pressure fluid in-flow and off-flow,
**characterized in that** the brake pressure pattern ($p_R$) for each individual wheel is determined at least by way of approximation, that based on the brake pressure pattern within the wheel brakes connected to one brake circuit (I, II) a volume model (VM1,2) is formed for each brake circuit which approximately indicates the pressure fluid volume taken up by the respective low pressure accumulator (NDS1, 2) or the filling level of the low pressure accumulator, that the control frequency and the time interval (T), respectively, between two successive brake pressure decreasing phases (Ph 2) is determined, and that the discharge capacity of the hydraulic pump (HP) is so dimensioned that the time interval (T) for two successive brake pressure decreasing phases (Ph 2) is adequate for completely evacuating the low pressure accumulator (NDS1,2).

**2.** A process according to claim 1, **characterized in that** for determining the brake pressure pattern ($p_R$) for each individual wheel a wheel brake pressure model is formed on the basis of the actual vehicle deceleration, the actuating times of the valves (AV, EV), the pressure/volume characteristic of the system and, optionally, additional parameters.

**3.** A process according to claim 1 or 2,
**characterized in that** the volume model (VM1, 2) is individually formed for each brake circuit (I, II) on the basis of the brake pressure model for each individual wheel and on the basis of the outlet valve actuating times and the pressure/volume characteristic of the hydraulic system inclusive of the wheel brakes and the low pressure accumulators.

**4.** A process according to any one or more of claims 1 to 3,
**characterized in that** the discharge capacity of the hydraulic pump (HP) and the number of revolutions (n) of the hydraulic pump, respectively, in response to the maximum value (MaxV) of the filling level of the accumulator or of the pressure fluid volumes (VM1, 2) or loads, respectively, taken up by the low pressure accumulators (NDS1,2) and determined by the formation of the volume model is so dimensioned that the time interval (T) between two successive brake pressure decreasing phases is just adequate for evacuating the low pressure accumulators (NDS1,2).

**5.** A process according to any one or more of claims 1 to 4,
**characterized in that** a minimum value of the discharge capacity ($\dot{V}$) and of the number of revolutions (n) of the hydraulic pump is pre-set in response to the filling level and the pressure fluid volume taken up by the low pressure accumulator (NDS1,2).

**6.** A process according to any one or more of claims 1 to 5,
**characterized in that** the predetermined minimum value of the number of revolutions of the pump is dependent on the vehicle speed ($V_{FZ}$), with a lower threshold of the number of revolutions applying to a lower vehicle speed threshold ($v_u$) and a higher threshold of the number of revolutions applying to a value above an upper vehicle speed threshold ($v_o$), and in the range between the lower and the higher speed thresholds the number of revolutions is raised linearly or in steps.

**Revendications**

**1.** Procédé de commande adaptative de la pompe hydraulique d'un dispositif de freinage à régulation, qui contient des accumulateurs basse pression qui reçoivent de l'agent de pression qui, en cas de régulation, est évacué des freins de roue, et qui sont vidés au moyen de la pompe hydraulique, tandis qu'au moyen d'un relevé et d'une analyse de grandeurs qui déterminent le flux d'agent de pression, il est formé un modèle de volume qui reproduit approximativement le flux d'entrée et le flux de sortie d'agent de pression, **caractérisé en ce que**, roue par roue, l'évolution de la pression de frein ($p_R$) est relevée au moins approximativement, **en ce que**, sur la base de l'évolution de pression de frein dans des freins de roue raccordés à un circuit de frein (I, II), il est formé, pour chaque circuit de frein, un modèle de volume (VM1,2) qui reproduit approximativement le volume d'agent de pression reçu par l'accumulateur basse pression (NDS1,2) respectif ou l'état de remplissage de l'accumulateur basse pression, **en ce que** la fréquence de régulation ou l'intervalle de temps (T) entre deux phases de suppression de pression de frein successives (Ph 2) est relevé et **en ce que** le débit de refoulement de la pompe hydraulique (HP) est dimensionné d'une manière telle que l'intervalle de temps (T) pour deux phases de suppression de pression de frein (Ph 2) successives suffit pour vider complètement les accumulateurs basse pression (NDS1,2).

2. Procédé suivant la revendication 1, **caractérisé en ce que**, pour relever l'évolution de pression de frein ($p_R$), il est formé, roue par roue, un modèle de pression de frein de roue sur la base de la décélération de véhicule actuelle, des durées d'actionnement des valves (AV, EV), de la ligne caractéristique pression/volume du système et éventuellement d'autres grandeurs ayant une influence.

3. Procédé suivant la revendication 1 ou 2, **caractérisé en ce que** le modèle de volume (VM1,2) est formé, individuellement pour chaque circuit de frein (I, II), sur la base du modèle de pression de frein de roue, réalisé roue par roue, et des durées d'actionnement de valve de sortie, de la ligne caractéristique pression/volume du système hydraulique, y compris les freins de roue et les accumulateurs basse pression.

4. Procédé suivant une ou plusieurs des revendications 1 à 3, **caractérisé en ce que** le débit de refoulement de la pompe hydraulique (HP) ou la vitesse de rotation (n) de la pompe hydraulique est dimensionné, en fonction de la valeur maximale (MaxV) de l'état de remplissage d'accumulateur ou des volumes d'agent de pression (VM1,2) ou des quantités de remplissage reçus par les accumulateurs basse pression (NDS1,2) et déterminés au moyen d'une formation de modèle de volume, d'une manière telle que l'intervalle de temps (T) disponible entre deux phases de suppression de pression de frein successives suffit exactement pour vider les accumulateur basse pression (NDS1,2).

5. Procédé suivant une ou plusieurs des revendications 1 à 4, **caractérisé en ce qu'**en fonction de l'état de remplissage ou du volume d'agent de pression reçu par l'accumulateur basse pression (NDS1,2), une valeur minimale du débit de refoulement ($\dot{V}$) ou de la vitesse de rotation de pompe hydraulique (n) est préfixée.

6. Procédé suivant une ou plusieurs des revendications 1 à 5, **caractérisé en ce que** la valeur minimale préfixée de la vitesse de rotation de pompe dépend de la vitesse de véhicule ($v_{FZ}$), tandis que, jusqu'à un seuil inférieur de vitesse de véhicule ($v_u$), une valeur limite inférieure de vitesse de rotation est valable, qu'au-dessus d'un seuil supérieur de vitesse de véhicule ($v_o$), une valeur limite inférieure de vitesse de rotation plus grande est valable et que, dans la zone située entre le seuil inférieur et le seuil plus élevé de vitesse, un accroissement linéaire ou étagé de la vitesse de rotation a lieu.

Fig. 1

Ph2 Ph4 Ph3    Ph2 Ph4 Ph3    Ph2 Ph4 Ph3    Ph2 Ph4 Ph3    Ph2 Ph4 Ph3

Geschwindigkeit v

$V_R$

Zeit t

Druck P

$P_R$

Zeit t

Volumen cm³

Füllstand ND-Speicher im Modell: VM

Pumpe dreht langsamer

Pumpe dreht schneller

Füllstand Niederdruckspeicher wird in Phase 2 loopweise gerechnet.

Füllstand ND-Speicher exakt: FS Ist

T

Zeit t

**Fig. 2**

**Fig. 3**

Niederdruckspeicher - Modell

Raddruck

V

Volumen-kennlinie

P

Abgelassene Bremsflüssigkeit Volumenstrom = f(Druck)

NDS
Niederdruck-speicher

Pumpe

Abgesaugte Bremsflüssigkeit Volumenstrom = f(Drehzahl)

TZ

Fig. 4

Fig. 5

Fig. 6